# EUROPEAN PATENT APPLICATION

(11) **EP 1 151 840 A1**
(43) Date of publication of application: **07.11.2001**
(21) Application number: 99961356.5
(22) Date of filing: 24.12.1999
(51) Int. Cl.: B29C 44/00, C08J 9/04, B29K 23/00

(54) **POLYOLEFINE FOAM SHEET PRODUCTION METHOD AND DEVICE THEREOF**

(30) Priority: 28.12.1998 JP 37328098; 17.02.1999 JP 3858499
(71) Applicant: IDEMITSU PETROCHEMICAL CO., LTD., Tokyo 108-0014 (JP)
(72) Inventor: FUJII, Atsushi, Chiba-ken 299-0205 (JP); UCHIYAMA, Katsumi, Chiba-ken 299-0205 (JP)
(74) Representative: Hucker, Charlotte Jane
(86) International application number: JP9907263
(87) International publication number: WO0040388

(57) **Abstract**

A polyolefine foam sheet production method using a device having first and second heating rolls (62, 63) and provided with an endless belt (65) passed around the rolls and rotated, wherein a foaming base sheet (69) is brought into contact with the first roll (62) via the belt (65) and heated at temperatures not lower than a temperature to permit thermocompression-bonding to the belt (65) and lower than a foaming initiation temperature to thermocompression-bond the sheet (69) to the belt (65); then the sheet (69) is brought into contact with the second roll (63) via the belt (65) and heated for foaming at temperatures not lower than a foaming initiation temperature to form a foam sheet (61), whereby stretching/shrinking and wrinkling of the foam sheet at heating/foaming can be prevented.

## Description

### Technical Field

The present invention relates to a production method of polyolefin foamed sheet and device thereof, which specifically relates to production method of armrest, headrest etc. of an automobile, decorative plywood, wall paper etc. of building interior, and sporting articles such as life jacket and protector.

### Background Art

Polyolefin foamed sheet is widely used for general goods and building material such as floor material and wall paper because of advantages such as heat resistance, oil resistance, chemical resistance, heat insulation property and pollution-free properties.

In order to produce the polyolefin foamed sheet, a heat oven is generally used to heat the sheet from both sides thereof to foam the sheet by heat. However, since nothing abuts on the both sides of the foamable raw sheet, irregularity is likely generated on the surface by being influenced by bubble cell in foaming. Further, cloth or paper is necessary to be attached on the sheet in order to prevent stretch and contraction of the sheet.

For instance, according to Japanese Patent Laid-Open publication No. Sho 56-137937, a production method of foamed sheet is disclosed, in which a material mainly of olefin resin added with cross-linking agent, foaming agent etc. is formed in sheet-shape using an extruder and calender roller and, subsequently, the foamable raw sheet is sandwiched between two endless belts and is foamed. According to the method, since the upper and lower belts are pressed by the heating rollers provided between both spindles with the belt wound around, foaming can be insufficient or the generated foam may be collapsed.

A production method of polyolefin resin continuous bubble foaming body is disclosed in Japanese Patent Publication Laid-Open No. Hei 9-290430, where a foaming sheet is put on a carrier having superior peelability against the foaming sheet and formed with a plurality of ventilation holes and the foaming sheet is heated and foamed while being carried by the carrier. According to this method, irregularities can be caused on the surface of the foamable raw sheet in heating and foaming process and the ventilation hole pattern may be transferred on the backside of the sheet.

### Disclosure of the Invention

An object of the present invention is to provide a production method and device of a polyolefin foamed sheet which can prevent stretch and contraction and wrinkles of the foamed sheet when the sheet is heated and foamed.

A production method of polyolefin foamed sheet according to the present invention includes the steps of: bringing a polyolefin foamable raw sheet into contact with a close-contact medium; heating the foamable raw sheet at a temperature not lower than a temperature permitting thermocompression-bonding to the close-contact medium and lower than a foam initiating temperature to thermocompression-bond the sheet to the close-contact medium; and, subsequently, heating to foam at least one of the surfaces of the foamable raw sheet at a temperature not lower than the foam initiating temperature while compression-bonding the foamable raw sheet to the close-contact medium, thereby obtaining the foamed sheet.

The close-contact medium may be endless belt, roller etc.

The polyolefin foamable raw sheet may be moved with the moving close-contact medium while being in close contact therewith, or, alternatively, may be moved while being in close contact with a fixed close-contact medium.

The foamable raw sheet may be heated by, for instance, a heating roller disposed on the backside of the endless belt, a heater incorporated in the roller etc. The foamable raw sheet may be preliminarily shaped and wound around the roller, or alternatively, may be directly fed from a calendering machine. Further alternatively, a melt web from an extruder may be used and fed onto the close-contact medium for thermocompression-bonding.

Any polymer of olefin may be used as the material of the polyolefin foamed sheet, which may be homopolymer or copolymer composed of more than one component. Further, composition of more than one of those components may be used.

The homopolymer may be polyethylene, polypropylene, polyisoprene, polybutadiene etc. The copolymer may be ethylene-α-olefin copolymer, ethylene-cyclic olefin copolymer, propylene-α-olefin copolymer etc.

Elastomer such as ethylene-propylene rubber (EPR) and fillers such as calcium carbonate may be mixed in the material.

Any foaming agent may be included in the foamable raw sheet as long as the foaming agent thermally decomposes at a predetermined temperature, which may be azodicarbonamide (ADCA), sodium acid carbonate etc.

The heating and foaming temperature is a temperature higher than a decomposition temperature of the foaming agent contained in the foamable raw sheet. However, foaming assisted agent may be added in the foamable raw sheet to lower the decomposition temperature than that of the foaming agent itself.

According to the above arrangement, since the foamable raw sheet is heated and foamed from at least one of the surfaces while heated surface of the foamable raw sheet is in close contact with the close-contact medium, thick (e.g. 1mm) sheet can be sufficiently foamed.

Since the raw sheet hardly expands in flat direction in accordance with foaming and solely expands in thickness direction, thick foamed sheet can be obtained.

Since the sheet can be foamed at a high temperature where viscosity of resin is reduced, the shape of foam cell becomes approximately spherical, thus obtaining a foamed sheet without irregularity on sheet surface thereof.

Since the heated surface of the sheet is in close contact with the close-contact medium, slight irregularities can be flattened, thus forming a skin layer.

Incidentally, the sheet includes a film having relatively smaller thickness than sheet.

In the present invention, a device having an endless belt wound and rotated around a plurality of rollers including heating first and second rollers may preferably be used, the foamable raw sheet may preferably be brought into contact with the first roller through the endless belt and the foamable raw sheet is heated thereon at the temperature not lower than a temperature permitting thermocompression-bonding to the endless belt and lower than a foam initiating temperature to thermocompression-bond the sheet to the endless belt, and the foamable raw sheet may preferably be brought into contact with the second roller through the endless belt and the foamable raw sheet is heated and foamed thereon at a temperature not lower than the foam initiating temperature to obtain the foamed sheet.

A third roller other than the first and the second rollers for cooling the sheet to peel off from the belt may be provided after the second roller in the endless belt.

An intermediate roller may be provided on the upstream of the foaming second roller to thermally treat the foamable raw sheet in two stages or more by the first roller and the intermediate roller. For instance, after thermocompression-bonding in two-stage heating, heating and foaming process may be conducted in the third stage. Alternatively, after thermocompression-bonding in the first stage and thermally cross-linking in the second stage, heating and foaming process may be conducted in the third stage. Further, after thermocompression-bonding in the first stage, two types of foaming agent may be independently foamed in the second and the third stages.

The foamable raw sheet may be heated in the first and the second rollers by a heating means provided in the first and the second rollers or a heating means provided to an exterior roller provided outside these rollers through the endless belt. Alternatively, an auxiliary heating device such as infrared rays device adjacent to the first and the second rollers may be used.

At least a surface of the foamable raw sheet thermocompression-bonded to the endless belt may be heated at a temperature not lower than a temperature permitting thermocompression-bonding to the endless belt and lower than the foam initiating temperature.

The lower limit of the temperature depends on the types of the resin and the upper limit depends on the types of foaming agent.

Though depending on the types of the foaming agent, specific temperature range is generally 70°C to 200°C, which may be 90°C to 180°C in the case of ADCA.

The material of the endless belt may be stainless steel, nickel spring steel, glass-fiber reinforced fluoroplastics etc. The surface of the belt may be coated with a material having good peelability (such as polyimide).

Incidentally, paper, cloth etc. may be laminated in thermocompression-bonding the raw foaming material or the sheet from the melt web onto the belt.

According to the present invention, since the raw sheet is heated and foamed while being thermocompression-bonded to the belt, wrinkle of the foamed sheet caused by stretch and contraction of the sheet can be prevented. Accordingly, production process can be stabilized and production rate can be enhanced.

Since the sheet is foamed under atmospheric pressure, deformation of the bubble cell on account of foaming pressure during foaming process can be prevented.

Further, since the foamed sheet can be produced with a single layer without using base cloth and paper as a support, the production process can be simplified by omitting peeling process of the base cloth and paper.

In the present invention, when the foamable raw sheet is heated and foamed, the polyolefin foamable raw sheet may preferably be heated from a first surface of the foamable raw sheet while a heated surface is in close contact with the close-contact medium, and, thereafter, the foamable raw sheet may preferably be heated from a second surface thereof to be foamed.

At this time, the foamable raw sheet is heated while the heated surface thereof is in close contact with the close-contact medium both when the foamable raw sheet is heated from the first surface and when the foamable raw sheet is heated from the second surface.

In order to implement the present invention, for instance, a pair of endless belts wound around a plurality of rollers including a heating roller may be provided and the first surface and the second surface of the foamable raw sheet may be sequentially brought into close contact with the endless belts.

According to the present invention, since the heating process is conducted from both sides of the foamable raw sheet to be heated and foamed, the foaming agent on one side does not remain un-foamed, so that foaming condition can be improved even with a thick sheet (e.g. 1 mm or more).

In the present invention, when the foamable raw sheet is heated and foamed, the foamable raw sheet may preferably be simultaneously heated to be foamed from both surfaces of the foamable raw sheet while a heated surface of the polyolefin foamable raw sheet is in close contact with the close-contact medium.

For implementing the present invention, a pair of endless belts wound around a plurality of rollers including a heating roller may be provided vertically sandwiching the foamable raw sheet and a heating means for heating and foaming the foamable raw sheet sandwiched by both of the endless belts may be provided.

In the present invention, the thermocompression-bonding of the foamable raw sheet to the close-contact medium may preferably be guided by a nip roller, and the surface temperature of the nip roller may preferably be controlled to be lower than the temperature of the close-contact medium.

The material of the surfacing of the nip roller may preferably be of low adhesive property against the foamable raw sheet. For instance, silicone rubber, Teflon resin (tradename: fluoroplastics), polyimide resin etc. may be used.

The pressing force of the nip roller may be appropriately conditioned in accordance with material, thickness etc. of the foamable raw sheet.

According to the present invention, by providing the nip roller, air-swallowing between the foamable raw sheet and the belt can be prevented.

When the foamable raw sheet is pressed against the endless belt by the nip roller, the surface temperature of the nip roller may preferably be lower than the temperature of the endless belt onto which the foamable raw sheet is thermocompression-bonded in order to prevent adhesion of the foamable raw sheet to the nip roller, which may, for instance, be 130°C or lower.

In order to control the surface temperature of the nip roller, a, for instance, water-cooling type cooling means may be provided inside or outside of the roller.

A production device of the present invention includes a first endless belt and a second endless belt respectively wound and rotated around a plurality of rollers including heating first and second rollers, where the first endless belt may be disposed so that a first surface of the foamable raw sheet is in close contact therewith, and where the second endless belt may be disposed so that a second surface of the foamable raw sheet is in close contact thereto.

According to the present invention, the foamable raw sheet is thermocompression-bonded to the endless belt by the first heating roller and the foamable raw sheet is heated and foamed by the second heating roller.

The material of the endless belt is as described above.

In order to switch the close-contact surface of the foamable raw sheet to the belt from the first surface to the second surface, a guide roller therefor may be provided between the first endless belt and the second endless belt.

The material of the surfacing of the guide roller may preferably be of low adhesive property against the foamable raw sheet. For instance, silicone rubber, Teflon resin (tradename: fluoroplastics), polyimide resin etc. may be used.

According to the device of the present invention, the first surface and the second surface of the foamable raw sheet can be sequentially heated.

A production device according to the present invention includes first endless belt and second endless belt respectively wound and rotated around a plurality of rollers including a heating roller, a polyolefin foamable raw sheet being in close contact with the endless belts, where the first and the second endless belt may sandwich the foamable raw sheet from both surfaces to be simultaneously in close contact with upper and lower surfaces of the foamable raw sheet, and where a heater for heating the foamable raw sheet sandwiched by both of the endless belts may be provided.

According to thus arranged present invention, the foamable raw sheet is thermocompression-bonded to the endless belt by the heating roller and the foamable raw sheet is heated and foamed by the heating means.

The material of the endless belt is the same as the endless belt according to second aspect of the present invention.

The heating means may be high-frequency induction heating (IH), halogen lamp, infrared heater etc.

A production device according to the present invention may include a first roller and a second roller having a first and second heating section on the circumference thereof with which a polyolefin foamable raw sheet is in close contact, where the first roller may be disposed so that a first surface of the foamable raw sheet is in close contact therewith, and where the second roller is disposed so that a second surface of the foamable raw sheet may be in close contact thereto.

According to thus arranged present invention, the foamable raw sheet is thermocompression-bonded to the roller by the first heating section and the foamable raw sheet is heated and foamed by the second heating section.

The surfacing of the first and the second rollers may be of low adhesive property against the foamable raw sheet, such as silicone rubber, Teflon resin (tradename: fluoroplastics), polyimide resin etc.

In order to switch the close-contact surface of the foamable raw sheet to the roller from the first surface to the second surface, a guide roller therefor may be provided between the first roller and the second roller.

The material of the surfacing of the guide roller is as described above.

### Brief Description of Drawings

Fig. 1 is a general illustration of a production device used in a production method of first embodiment of the present invention;
Fig. 2 is a general illustration of a production device of polyolefin foamed sheet used in a production method of second embodiment of the present invention;
Fig. 3 is a general illustration of a production device of foamed sheet of third embodiment of the present invention;
Fig. 4 is a general illustration of a production method of foamed sheet of fourth embodiment of the present invention; and
Fig. 5 is a general illustration of a production device used in a production method according to comparison 3.

### Best mode for Carrying out the Invention

### [First Embodiment]

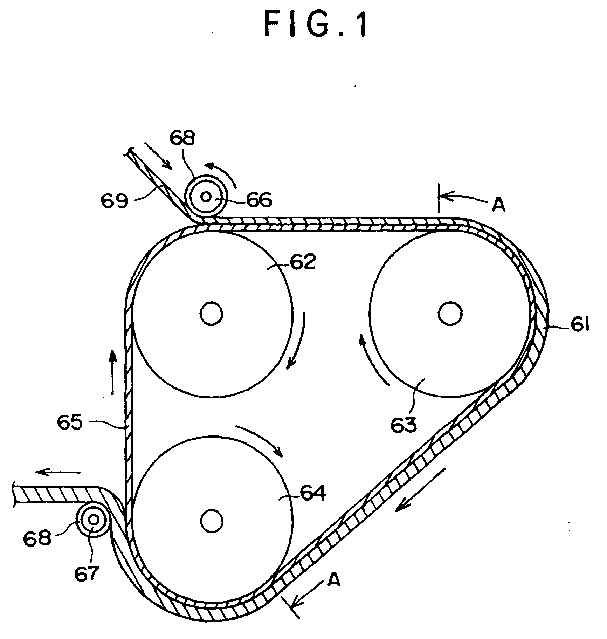

A production method of polyolefin foamed sheet 61 according to first embodiment of the present invention will be described below with reference to Fig. 1.

Initially, production device used in the present embodiment will be described.

The production device has first to third rollers 62, 63, 64 disposed at respective corners of a triangle, an endless belt 65 wound around the three rollers 62 to 64, a first nip roller 66 for pressing a foamable raw sheet 69 against the first roller 62, and a second nip roller 67 for pressing the foamed sheet 61 against the third roller 64.

The first roller 62 and the second roller 63 are heating rollers having a heating means such as a heater installed therein.

On the other hand, the third roller 64 is a cooling roller having, for instance, a water-cooling means installed therein.

A surface material 68 composed of silicone rubber etc. is attached on an outer circumference of the first and the second nip rollers 66 and 67. The nip rollers 66 and 67 are adjusted to apply an appropriate biasing force on the first roller 62 or the third roller 64.

At least one of the first to the third rollers 62 to 64 is connected to a rotary driving means such as a motor.

The polyolefin foamed sheet 61 is manufactured using the production device as follows.

Initially, the foamable raw sheet 69 fed from a feeding roller (not shown) of the foamable raw sheet 69 is abutted to the first roller 62 through the endless belt 65 while pressing with the first nip roller 66. The foamable raw sheet 69 is heated by the heated first roller 62 at a temperature higher than the temperature capable of thermocompression-bonding to the belt 65 and lower than a foam initiating temperature to thermocompression-bond the foamable raw sheet 69 to the belt 65.

Subsequently, the foamable raw sheet 69 thermocompression-bonded to the endless belt 65 is moved to the side of the second roller 63 in accordance with rotation of the belt 65 and bring the foamable raw sheet 69 into contact with the second roller 63 through the belt 65. The foamable raw sheet 69 is heated and foamed by the heated second roller 63 at a temperature higher than the foam initiating temperature.

Thereafter, the foamed sheet 61 is moved to the third roller 64 side to cool the foamed sheet 61 and wind up with a wind-up roller (not shown). A skin layer is formed on one side of the foamed sheet 61.

### [Second Embodiment]

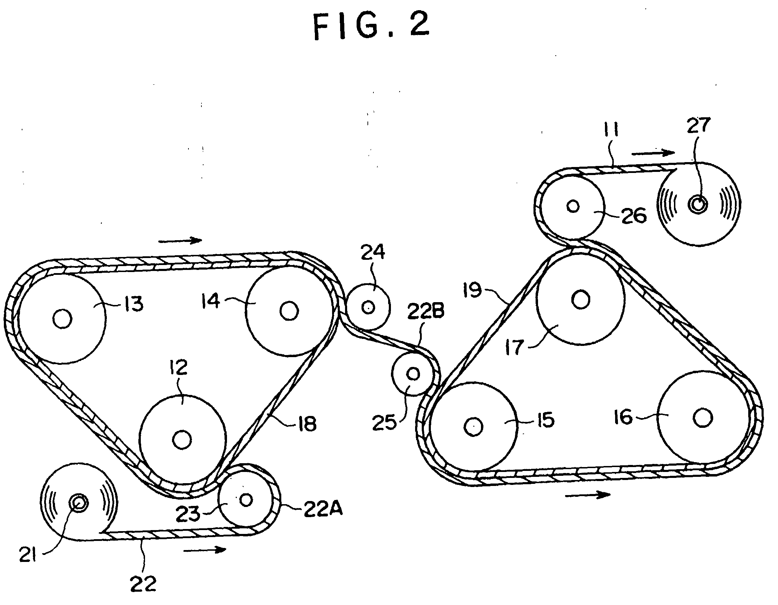

A production method of polyolefin foamed sheet according to second embodiment of the present invention will be described below with reference to Fig. 2.

Initially, production device of a polyolefin foamed sheet 11 used in the present embodiment will be described.

As shown in Fig. 2, the production device has a first endless belt 18 wound around three rollers 12 to 14 disposed at respective comers of a triangle, and a second endless belt 19 also wound around three rollers 15 to 17 disposed at respective comers of a triangle.

The first roller 12 and the second roller 13 in the first endless belt 18 are heating rollers having a heating means such as a heater installed therein. The third roller 14 is a cooling roller having a, for instance, water-cooling means installed therein.

On the other hand, the fourth roller 15 and the fifth roller 16 in the second endless belt 19 are heating rollers having a heating means such as a heater installed therein. The seventh roller 17 is a cooling roller having a, for instance, water-cooling means installed therein.

At least one of the first to the third rollers 12 to 14 and at least one of the fourth to sixth rollers 15 to 17 are connected to a rotary driving means such as a motor.

The first and the second endless belts 18 and 19 are made of metal such as stainless steel or resin such as grass-fiber reinforced fluoroplastics, where polyimide resin is coated on the surface of the endless belts on which the sheet is closely attached.

A first guide roller 23 for pressing the foamable raw sheet 22 fed from a feed roller 21 on the first endless belt 18 is provided adjacent to the first roller 12.

Second and third guide rollers 24 and 25 for switching a surface of the foamable raw sheet 22 in close contact with the belt from first surface 22A to a second surface 22B is provided between the first and the second endless belts 18 and 19. Specifically, the second and the third guide rollers are disposed so that the second surface 22B of the foamable raw sheet 22 abuts to the second guide roller 24 and the first surface 22A of the foamable raw sheet 22 abuts to the third guide roller 25.

A fourth guide roller 26 for stripping the foamed sheet 11 from the second endless belt 19 and guiding to the wind-up roller 27 is provided adjacent to the sixth roller 17.

Polyimide resin is coated on the surface of the guide rollers 23 to 26.

The polyolefin foamed sheet 11 is produced using the production device as follows.

Initially, the foamable raw sheet 22 fed from the feed roller 21 is brought into contact with the endless belt 18 at the position of the first roller 12 by the first guide roller 23 and the first surface 22A of the foamable raw sheet 22 is brought into close contact with the endless belt 18. The heating temperature at the time is not lower than a temperature capable of thermocompression-bonding the foamable raw sheet 22 to the belt and lower than foam initiating temperature thereof.

Subsequently, the foamable raw sheet 22 in close contact with the endless belt 18 is moved toward the second roller 13 in accordance with rotation of the belt 18 and bring the first surface 22A of the foamable raw sheet 22 into contact with the second roller 13 through the belt 18. The first surface 22A of the foamable raw sheet 22 is heated and foamed by the heated second roller 13 at a temperature higher than the foam initiating temperature while the first surface 22A of the foamable raw sheet 22 is in close contact with the belt 18.

Thereafter, the foamed sheet 22 with at least the first surface 22A being heated and foamed is moved to the third roller 14 side to cool the foamable raw sheet 22.

Next, the foamable raw sheet 22 is moved to the second endless belt 19 side through the second guide roller 24 and is brought into contact with the belt 19 by the third guide roller 25 at the position of the fourth roller 15, where the second surface 22B of the foamable raw sheet 22 is brought into close contact with the endless belt 19 while heated by the roller 15. The heating temperature at the time is not lower than a temperature capable of thermocompression-bonding of the foamable raw sheet 22 to the belt 19 and lower than a foam initiating temperature thereof.

Further, the foamable raw sheet 22 in close contact with the endless belt 19 is moved toward the fifth roller 16 in accordance with rotation of the belt 19 and bring the second surface 22B of the foamable raw sheet 22 into contact with the fifth roller 16 through the belt 19. The second surface 22B of the foamable raw sheet 22 is heated and foamed by the heated fifth roller 16 at a temperature higher than the foam initiating temperature while the second surface of the foamable raw sheet is in close contact with the belt 19.

Then, after the foamed sheet 11 is moved toward the sixth roller 17 to cool the foamed sheet 11, the foamed sheet 11 is wound up with the wind-up roller 27 through the fourth guide roller 26. The foamed sheet 11 has skin layer on both sides thereof.

### [Third Embodiment]

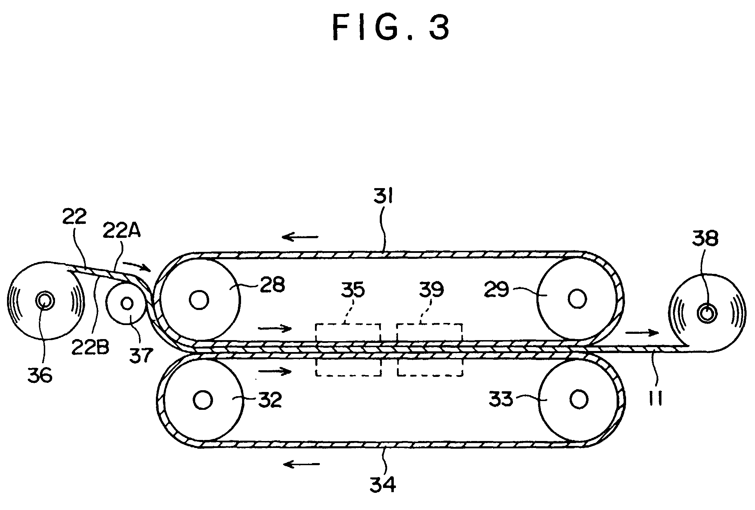

A production method of polyolefin foamed sheet according to third embodiment of the present invention will be described below with reference to Fig. 3.

Initially, production device of a polyolefin foamed sheet 11 used in the present embodiment will be described.

As shown in Fig. 3, the production device has a first endless belt 31 wound between first and second rollers 28 and 29 and a second endless belt 34 wound around third and fourth rollers 32 and 33, the first endless belt 31 being disposed so that first surface 22A of the foamable raw sheet 22 is in close contact therewith, the second endless belt 34 being disposed so that second surface 22B of the foamable raw sheet 22 is in close contact therewith.

The first and the third roller 28 and 32 are heating rollers having a heating means such as a heater installed therein. The second and the fourth rollers 29 and 33 are cooling rollers having a, for instance, water-cooling means installed therein.

The material of the endless belts 31 and 34 are the same as the endless belts 18 and 19 according to the first embodiment.

A heating means 35 such as infrared rays for heating both surfaces 22A and 22B of the foamable raw sheet 22 is provided facing the foamable raw sheet 22 sandwiched by the endless belts 31 and 34 on the side of the first and the third rollers 28 and 32. An, for instance, air-cool cooling means 39 for cooling the both sides 22A and 22B of the foamable raw sheet 22 is provided on the side of the second and the fourth rollers 29 and 33.

First guide roller 37 for pressing the foamable raw sheet 22 fed from the feed roller 36 to the first endless belt 31 is provided adjacent to the first roller 28.

A wind-up roller 38 for winding up the foamed sheet 11 is provided at the back of the second and the fourth rollers 29 and 33.

A polyolefin foamed sheet 11 is produced using the production device as follows.

Initially, the foamable raw sheet 22 fed from the feed roller 36 is brought into contact with the first endless belt at the position of the first roller 28 by the first guide roller 37. While being heated by the first and the third rollers 28 and 32, the both surfaces 22A and 22B of the foamable raw sheet 22 are brought into close contact with the first and the second endless belts 31 and 34. The heating temperature at the time is not lower than a temperature capable of thermocompression-bonding the foamable raw sheet 22 to both of the belts 31 and 34 and lower than a foam initiating temperature thereof.

Subsequently, the foamable raw sheet 22 in close contact with both endless belts 31 and 34 is moved into the heating means 35 in accordance with rotation of the belts 31 and 34, where the foamable raw sheet 22 is heated and foamed by the heating means 35 simultaneously from both surfaces 22A and 22B of the foamable raw sheet 22 while the both surfaces 22A and 22B of the foamable raw sheet 22 is in close contact with the belts 31 and 34, thus obtaining the foamed sheet 11.

Thereafter, the foamed sheet 11 in close contact with the both endless belts 31 and 34 are cooled by passing through the cooling means 39 in accordance with the rotation of the belts 31 and 34 and the foamed sheet 11 is subsequently cooled by the second and the fourth rollers 29 and 33 to be wound up by the wind-up roller 38. The foamed sheet 11 has skin layers on both sides thereof.

### [Fourth Embodiment]

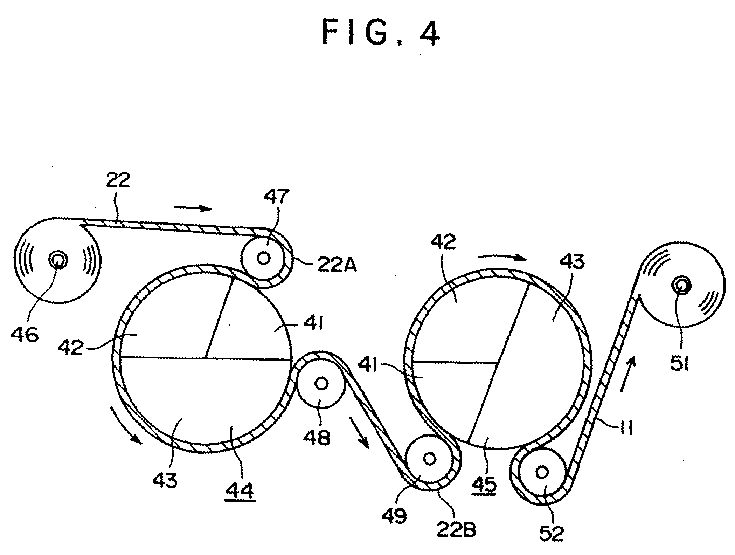

A production method of polyolefin foamed sheet according to fourth embodiment of the present invention will be described below with reference to Fig. 4.

Initially, production device of a polyolefin foamed sheet 11 used in the present embodiment will be described.

As shown in Fig. 4, the production device has a first roller 44 and a second roller 45 sequentially arranged with first and second heating sections 41 and 42 and a cooling section 43 on the surface thereof. The first heating section 41 occupies approximately one sixth, the second heating section 42 occupies approximately one third and the cooling section 43 occupies approximately half of the total surface, respectively.

The first and the second heating sections 41 and 42 of the rollers 44 and 45 has a heating means such as a heater installed therein and a cooling means such as water-cooling type is installed in the cooling section 43.

Both of the rollers 44 and 45 are fixed and have rotatable ring-shaped metal band provided on circumference thereof.

A first guide roller 47 for pressing the foamable raw sheet 22 fed from a feed roller 46 against the first roller 44 is provided adjacent to the first heating section 41 of the first roller 44.

Second and third guide rollers 48 and 49 for switching close-contact surface of the foamable raw sheet 22 against the roller from first surface 22A to second surface 22B are provided between the first and the second rollers 44 and 45. Specifically, the second surface 22B of the foamable raw sheet 22 abuts to the second guide roller 48 and the second and the third guide rollers 48 and 49 are disposed so that the second surface 22B of the foamable raw sheet 22 abuts to the second guide roller 48 and the first surface 22A of the foamable raw sheet 22 abuts to the third guide roller 49.

Fourth guide roller 52 for stripping the foamed sheet 11 from the second roller 45 and guiding toward a wind-up roller 51 is provided adjacent to the second roller 45. Polyimide resin is coated on both of the rollers 44 and 45.

Polyolefin foamed sheet 11 is produced using the production device as follows.

Initially, the foamable raw sheet 22 fed from the feed roller 46 is brought into contact with the first heating section 41 of the first roller 44 by the first guide roller 47 for preliminarily heating the first surface 22A of the roam raw sheet 22 by the heating section 41. The heating temperature at the time is not lower than a temperature capable of thermocompression-bonding the foamable raw sheet 22 to the roller 44 and lower than a foam initiating temperature thereof.

Subsequently, the preliminarily heated foamable raw sheet 22 is moved to the position of the second heating section 42, where the foamable raw sheet 22 is heated and foamed by the second heating section 42 at a temperature not less than the forming initiation temperature while the first surface 22A of the foamable raw sheet 22 is in close contact with the rotatable ring-shaped metal band of the roller 44 at the second heating section 42.

Thereafter, the foamable raw sheet 22 with at least the first surface 22A being heated and foamed is moved toward the cooling section 43 to cool the foamable raw sheet 22.

Next, the foamable raw sheet 22 is moved toward the second roller 45 through the second guide roller 48 and is brought into contact with the first heating section 41 of the second roller 45 by the third guide roller 49, where the second surface 22B of the foamable raw sheet 22 is preliminarily heated by the heating section 41. The heating temperature at the time is not lower than a temperature capable of thermocompression-bonding of the foamable raw sheet to the roller and lower than a foam initiating temperature thereof.

Subsequently, the preliminarily heated foamable raw sheet 22 is moved to the position of the second heating section 42, where the foamable raw sheet 22 is heated and foamed at a temperature not less than the foam initiating temperature by the second heating section 42 to form a completely foamed sheet 11 while the second surface 22B of the foamable raw sheet 22 is in close contact with the second heating section 42.

Then, the foamed sheet 11 is moved to the cooling section 43, and, after the foamed sheet 11 is cooled, the foamed sheet 11 is wound up to the wind-up roller 51 through the fourth guide roller 52. The foamed sheet 11 has skin layers on both sides thereof.

### [Experiments 1 and 2]

The polyolefin foamed sheet 61 was produced according to the above-described first embodiment with the following specific conditions.

Initially, following sheet material was kneaded using a mixing roller at 180°C and was filled in a calendering machine through a warming roller. The calendering machine was four-roller type and a temperature of the first roller was set as 140°C. A foamable raw sheet 69 having final thickness of 0.2mm and width of 1020mm was obtained by the calendering machine.

### (Sheet Raw Material)

Polyolefin foam resin ··· MORETEC 0134N (tradename), L-LDPE (linear low-density polyethylene) manufactured by Idemitsu Petrochemical Co., Ltd., MRF: 1.2g/10min, 80kg.

Ethylene-propylene rubber (EPR) ··· P0680 (tradename) manufactured by Mitsui Petrochemical Industries, Ltd, MRF: 0.7g/10min (230°C), 20kg.

Foaming Agent ··· VINYFOR AC#3 (tradename) azodicarbonamide (ADCA) manufactured by EIWA CHEMICAL IND. CO., LTD., decomposition temperature: 208°C, 3kg.

Foaming assisted agent ··· SP-100Z (tradename) metallic soap (fatty monocarboxilic acid zinc) manufactured by EISIN CHECMICAL Co., Ltd., 1kg.

Next, the foamable raw sheet 69 was used to produce the polyolefin foamed sheet 61 under the temperature of the first and the second rollers 62 and 63, the surface temperature of the first nip roller 66, the material of the surface material of the first nip roller 66 and foaming ratio as shown in Table 1. Heating and subsequent after-heating time (A-A section in Fig. 1) was 45 seconds.

### [Comparisons 1 and 2]

Though produced as in the aforesaid experiments, the temperature of the first and the second rollers etc. of the production device was arranged as shown in Table 1.

### [Comparison 3]

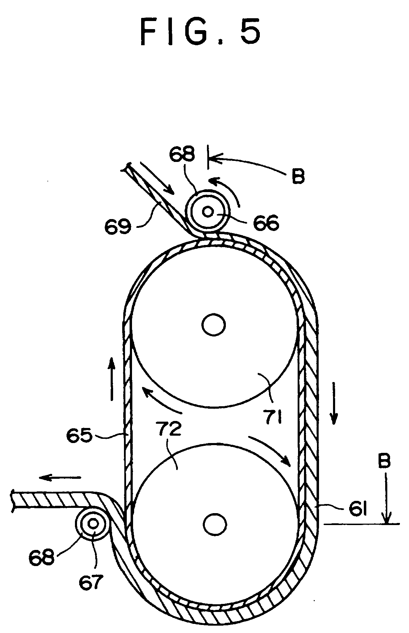

As shown in Fig. 5, the production device used in the present comparison had no first heating roller 62 of the production device according to the aforesaid embodiment and the first and the second heating rollers 71 and 72 corresponding to the second and the third heating rollers 63 and 64 were provided.

The same foamable raw sheet 69 as the aforesaid experiments was used to produce the polyolefin foamed sheet 61 of the present comparison under the temperature of the first and the second rollers 71 and 72 etc. as shown in Table 1. Heating and subsequent after-heating time (B-B section in Fig. 1) was 45 seconds.

### [Evaluation of Experiments 1 and 2 and Comparisons 1 to 3]

Circumstance under production and appearance of the obtained foamed sheet 61 of the aforesaid experiments 1 and 2 and comparisons 1 to 3 are also shown in Table 1.

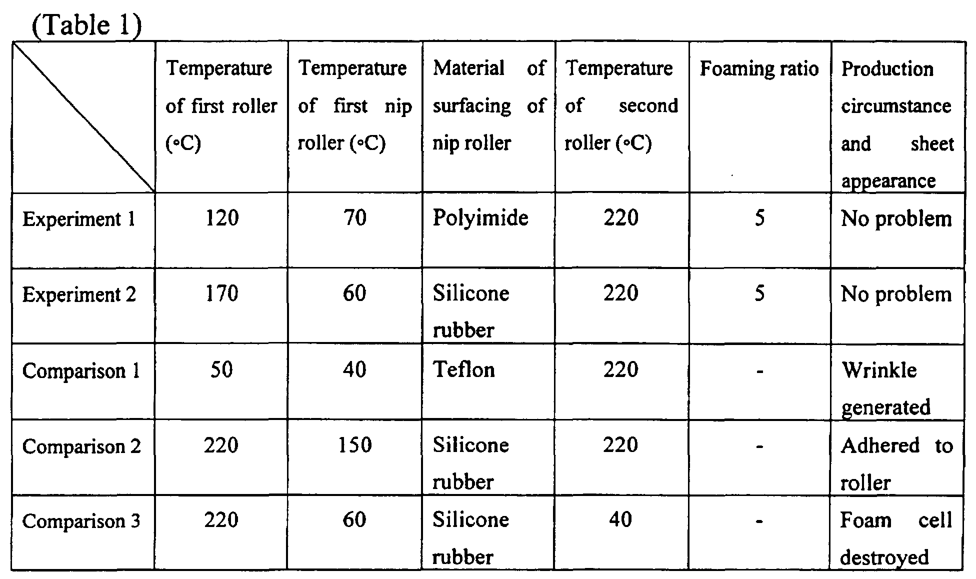

As shown in Table 1, since the foamable raw sheet 69 was thermocompression-bonded to the belt 65 by the first roller 62 and the foamable raw sheet 69 was heated and foamed by the second roller 63 to obtain the foamed sheet 61 in the Experiments 1 and 2, the polyolefin foamed sheet 61 having no wrinkle and good appearance could be obtained.

On the other hand, though the same device as the Experiments was used in the Comparison 1, since the heating temperature on the first roller 62 was low and the foamable raw sheet 69 was foamed by the second roller 63 without thermocompression-bonding to the belt 65, the foamed sheet 61 was expanded and contracted to generate wrinkles on the foamed sheet 61.

Though the same device as the Experiments was used in the Comparison 2, since the raw sheet was heated to the foam initiating temperature by the first roller 62, the foamed bubble cell was deformed and the foamed sheet was adhered to the first nip roller 66.

Though the surface temperature of the nip roller was controlled low in the Comparison 3, the foamable raw sheet 69 was foamed simultaneously with thermocompression-bonding of the foamable raw sheet 69 to the belt 65, so that foamed bubbled cell was deformed though a foamed sheet was obtained.

### [Experiment 3]

The polyolefin foamed sheet 11 was produced according to the above-described second embodiment under specific conditions shown below.

Initially, following sheet material was kneaded using a mixing roller at 180°C and was filled in a calendering machine through a warming roller. The calendering machine was four-roller type and a temperature of the first roller was set as 140°C. A foamable raw sheet 69 having final thickness of 0.2mm and width of 1020mm was obtained by the calendering machine.

### <Sheet Material>

Polyolefin foam resin ··· MORETEC 0134N (tradename), L-LDPE (linear low-density polyethylene) manufactured by Idemitsu Petrochemical Co., Ltd., MRF: 1.2g/10min, 80kg.

Ethylene-propylene rubber (EPR) ··· P0680 (tradename) manufactured by Mitsui Petrochemical Industries, Ltd, MRF: 0.7g/10min (230°C), 20kg.

Foaming Agent ··· VINYFOR AC#3 (tradename) azodicarbonamide (ADCA) manufactured by EIWA CHEMICAL IND. CO., LTD., decomposition temperature: 208°C, 3kg.

Foaming assisted agent ··· SP-100Z (tradename) metallic soap (fatty monocarboxilic acid zinc) manufactured by EISIN CHECMICAL Co., Ltd., 1kg.

Next, the foamable raw sheet 22 was used under the following condition of temperature of roller etc. of the production device.

Temperature of the first and the fourth roller 12 and 15 ··· 150°C

Temperature of the second and the fifth roller 13 and 16 ··· 190°C

Foaming ratio ··· 5

Movement time from the second roller 13 or the fifth roller 16 to the third roller 14 or the sixth roller 17 ··· 50 seconds

The obtained polyolefin foamed sheet (thickness 4mm) 11 had complete foam over the entire sheet, had no irregularities and wrinkles on the surface thereof and had good appearance.

### [Experiment 4]

The polyolefin foamed sheet 11 was produced according to the above-described third embodiment under specific conditions shown below.

Though the same foamable raw sheet 22 as the Experiment 1 was used, the temperature of the roller of the production device etc. was arranged as follows.

Temperature of the first and the third roller 28 and 32 ··· 150°C

Temperature of the heating means 35 ··· 200°C

Foaming ratio ··· 5

Movement time from the heating means 35 to the cooling means 39 ··· 45 seconds

The obtained polyolefin foamed sheet 11 had complete foam over the entire sheet, had no irregularities and wrinkles on the surface thereof and had good appearance.

### [Experiment 5]

The polyolefin foamed sheet 11 was produced according to the above-described fourth embodiment under specific conditions shown below.

Though the same foamable raw sheet 22 as the Experiment 1 was used, the temperature of the roller of the production device etc. was arranged as follows.

Temperature of the first heating section 41 ··· 150°C

Temperature of the second heating section 42 of the first roller 44 ··· 200°C

Temperature of the second heating section 42 of the second roller 45 ··· 190°C

Foaming ratio ··· 5

Movement time from the second heating section 42 to the cooling section 43 ··· 45 seconds

The obtained polyolefin foamed sheet 11 had complete foam over the entire sheet, had no irregularities and wrinkles on the surface thereof and had good appearance.

### Industrial Availability

The present invention can be used as a production method of polyolefin foamed sheet and device thereof, which can be used for producing armrest and headrest etc. of an automobile, decorative plywood and wall paper etc. of building interior, and sporting articles such as life jacket and protector.

## Claims

1. A production method of polyolefin foamed sheet, comprising the steps of:
bringing a polyolefin foamable raw sheet into contact with a close-contact medium;
heating the foamable raw sheet at a temperature not lower than a temperature permitting thermocompression-bonding to the close-contact medium and lower than a foam initiating temperature to thermocompression-bond the sheet to the close-contact medium; and
subsequently, heating to foam at least one of the surfaces of the foamable raw sheet at a temperature not lower than the foam initiating temperature while compression-bonding the foamable raw sheet to the close-contact medium, thereby obtaining the foamed sheet.

2. The production method of polyolefin foamed sheet according to claim 1, wherein a device having an endless belt wound and rotated around a plurality of rollers including heating first and second rollers is used,
wherein the foamable raw sheet is brought into contact with the first roller through the endless belt and the foamable raw sheet is heated thereon at the temperature not lower than a temperature permitting thermocompression-bonding to the endless belt and lower than a foam initiating temperature to thermocompression-bond the sheet to the endless belt, and
wherein the foamable raw sheet is brought into contact with the second roller through the endless belt and the foamable raw sheet is heated and foamed thereon at a temperature not lower than the foam initiating temperature to obtain the foamed sheet.

3. The production method of polyolefin foamed sheet according to claim 1, wherein, after the polyolefin foamable raw sheet is heated from a first surface of the foamable raw sheet while a heated surface is in close contact with the close-contact medium, the foamable raw sheet is heated from a second surface thereof to be foamed in heating and foaming the foamable raw sheet.

4. The production method of polyolefin foamed sheet according to claim 1, wherein, when the foamable raw sheet is heated and foamed, the foamable raw sheet is simultaneously heated to be foamed from both surfaces of the foamable raw sheet while a heated surface of the polyolefin foamable raw sheet is in close contact with the close-contact medium.

5. The production method of polyolefin foamed sheet according to any one of claims 1 to 4, wherein the thermocompression-bonding of the foamable raw sheet to the close-contact medium is guided by a nip roller, and
wherein the surface temperature of the nip roller is controlled to be lower than the temperature of the close-contact medium.

6. A production device of polyolefin foamed sheet, comprising a first endless belt and a second endless belt respectively wound and rotated around a plurality of rollers including heating first and second rollers,
wherein the first endless belt is disposed so that a first surface of the foamable raw sheet is in close contact therewith, and
wherein the second endless belt is disposed so that a second surface of the foamable raw sheet is in close contact therewith.

7. A production device of polyolefin foamed sheet, comprising first endless belt and second endless belt respectively wound and rotated around a plurality of rollers including a heating roller, a polyolefin foamable raw sheet being in close contact with the endless belts, wherein the first and the second endless belt sandwich the foamable raw sheet from both surfaces to be simultaneously in close contact with upper and lower surfaces of the foamable raw sheet, and
wherein a heater for heating the foamable raw sheet sandwiched by both of the endless belts is provided.

8. A production device of polyolefin foamed sheet, comprising a first roller and a second roller having a first and second heating section on the circumference thereof with which a polyolefin foamable raw sheet is in close contact,
wherein the first roller is disposed so that a first surface of the foamable raw sheet is in close contact therewith, and
wherein the second roller is disposed so that a second surface of the foamable raw sheet is in close contact therewith.
